# EUROPEAN PATENT SPECIFICATION

(11) **EP 2 082 598 B1**
(45) Date of publication and mention of the grant of the patent: **18.04.2018**
(21) Application number: 06829029.5
(22) Date of filing: 13.11.2006
(51) Int. Cl.: H04W 36/20

(54) **WIRELESS TELECOMMUNICATIONS SYSTEMS**
DRAHTLOSE TELEKOMMUNIKATIONSSYSTEME
SYSTÈMES DE TÉLÉCOMMUNICATIONS SANS FIL

(43) Date of publication of application: 29.07.2009
(73) Proprietor: Telefonaktiebolaget LM Ericsson (publ), 164 83 Stockholm (SE)
(72) Inventor: OSTERLING, Jacob, 175 60 Jarfalla (SE); MOLANDER, Mats, 192 53 Sollentuna (SE)
(74) Representative: Ericsson
(86) International application number: PCT/EP2006/010868
(87) International publication number: WO 2008/058551

(56) References cited:
- EP-A- 1 122 895
- EP-A- 1 662 823
- WO-A2-2006/119338
- US-A1- 2002 061 000
- US-A1- 2004 192 360

## Description

### WIRELESS TELECOMMUNICATIONS SYSTEMS

The present invention relates to wireless telecommunications systems, and in particular to resource allocation in wireless telecommunications systems.

### BACKGROUND

Wireless telecommunications systems typically use a cellular structure in which a plurality of basestations define respective communications cells, and mobile terminals within those cells communicate with the corresponding basestation. A basestation allocates communication resources (typically time-frequency blocks) to each mobile terminal within its cell, for enabling communications between the mobile terminal and the basestation.

As a mobile terminal moves around a cell, the radio conditions that it experiences change. In some locations, such as those at an edge region of the cell, high transmission power may be required in order for data to be successfully transmitted between the mobile terminal and the basestation.

However, as a mobile terminal approaches a cell border, the high transmission powers can cause the mobile terminal to disturb communications in a neighbouring cell. In addition, or alternatively, communications from the mobile terminal may be disturbed by communications within the neighbouring cell.

In addition, the handover from one basestation to another will cause the mobile terminal to make an unsynchronised random access in the destination cell. The random access will add to the handover interruption time.

Furthermore, the frequency planning of cell-border mobile terminals is difficult: either a static distribution (for example, 1/3) reuse scheme is used, or a fractional load scheme. However, neither of these schemes gives optimum performance.

Document WO 2006/119338 relates to a wireless communication in which access points, APs, serves to provide stations, STAs, with wireless access to communication network. The APs, use the same or at least a partly overlapping frequency band, and an objective of the solution disclosed is to reduce the interference between communications with APs in the proximity. The object is achieved by first determining that there is another AP in the proximity, based on one or more STAs reporting a strong signal from the other AP or from another STA served by the other AP. If such strong signal is reported, and the other AP use the same frequency band, it is determined to be in the proximity, and then the communication resources assigned by the AP to all STAs served is reported to the proximity AP. The intention is that these resources shall not be used by the AP in the proximity. In this way nearby APs shall be able to use different part of the frequency band when serving STAs.

There is still a need for improved utilization of resources, to enable high volumes of traffic in the network and at the same time mitigate interference such that high QoS can be provided to the users.

### SUMMARY OF THE PRESENT INVENTION

The invention is defined in the appended claims.

According to one aspect of the present invention, there is provided a wireless telecommunications system comprising a first basestation which defines a first communications cell, and which is operable to communicate with mobile terminals located within the first communications cell, a second basestation which defines a second communications cell, and which is operable to communicate with mobile terminals located within the second communication cell, a resource allocation unit operable to allocate communication resources within the second communications cell, a detector operable to detect a mobile terminal within the first cell, which mobile terminal has a communications quality below a threshold level, the detector being operable to communicate information relating to such a mobile terminal to the resource allocation unit, wherein the resource allocation unit is operable to receive information relating to such a mobile terminal from the detector, and to allocate resources within the second communications cell using such received information.

The detector may be provided by the first basestation, and the resource allocation unit may be provided by the second basestation. The first basestation may be operable to transmit information relating to a detected mobile terminal-to the second basestation. The resource allocation unit may be operable to allocate communications resources within the second cell so as to avoid resources allocated to the detected mobile terminal from the first cell.

A second resource allocation unit may be provided in the first basestation, and such a unit may be operable to allocate communications resources within the first communications cell so as to avoid allocated resources in the second communications cell.

The resource allocation unit may be operable to allocate communications resources within the second cell without reference to the information relating to such a detected mobile terminal.

According to one aspect of the present invention, there is provided, a method for allocating communication resources in a wireless telecommunications system including a first basestation which defines a first communications cell, and which is operable to communicate with mobile terminals located within the first communication cell, and a second basestation which defines a second communications cell, and which is operable to communicate with mobile terminals located within the second communication cell, the method comprising detecting a mobile terminal which is communicating within the first communications cell with a communication quality below a threshold level, allocating communications resources for the second cell using information relating to such a detected mobile terminal.

Detecting such a mobile terminal may be performed by the first basestation. Allocating resources for the second cell may be performed by the second basestation. Such a method may further comprise transferring information relating to such a detected mobile terminal from the first basestation to the second basestation.

Allocating communications resources may comprise allocating resources for mobile terminals within the second cell so as to avoid resources allocated to the detected mobile terminal from the first cell.

Allocating resources for the first communications cell may use the first basestation, and preferably avoids allocated resources in the second communications cell.

Allocating communications resources may comprise allocating resources for mobile terminals within the second cell without reference to the information relating to such a detected mobile terminal.

The information relating to such a detected mobile terminal may relate to scheduling of communications for that mobile terminal within the first cell.

The information relating to such a detected mobile terminal may be transmitted from the first basestation to the second basestation using an X2 communications interface.

The information relating to such a detected mobile terminal may includes information relating to possible disturbance of the second cell of the mobile terminal.

According to another aspect of the present invention, there is provided a basestation for use in a wireless telecommunications system, the basestation defining a communications cell, and being operable to communicate with mobile stations located within the communications cell, and comprising a resource allocation unit operable to receive information relating to a mobile terminal operating in another communications cell, and to allocate communication resources within the communications cell, in dependence upon such received information.

Such a basestation may include a detector operable to detect a mobile terminal operating within the communications cell, which mobile terminal has a communications quality below a threshold level, the detector being operable to transmit information relating to a detected mobile terminal to another basestation.

The resource allocation unit may be operable to allocate communications resources within the communications cell so as to avoid resources allocated to the detected mobile terminal from the other communications cell.

According to another aspect of the present invention, there is provided a basestation for use in a wireless telecommunications system, the basestation defining a communications cell, and being operable to communicate with mobile stations located within the communications cell, and comprising a detector operable to detect a mobile terminal operating within the communications cell, which mobile terminal has a communications quality below a threshold level, the detector being operable to transmit information relating to a detected mobile terminal to another basestation.

Mobile terminals having low quality radio conditions and/or high transmission power are treated somewhat differently from mobile terminals which are closer to the basestation.

Embodiments of the present invention may give the following benefits:
- No reserved cell-edge frequency pools are required for 1/3 or similar reuse. The cell-edge blocks are reserved, and released, as the load changes.
- The second basestation can chose to accept the reservation and avoid using the corresponding resource blocks, or, if the load is too high, reject it.
- The signalling can include quality of service (QoS), etc. and therefore better control of the second target basestation usage is possible compared to a mere opportunistic approach.
- The mobile terminal is also a very high candidate for a future handover to the second basestation. The second basestation may get an opportunity to measure the mobile terminal to allow for a synchronous handover.

### BRIEF DESCRIPTION OF THE DRAWINGS

Figure 1 is a schematic diagram illustrating a wireless telecommunications system;
Figure 2 is a block diagram illustrating a basestation embodying one aspect of the present invention;
Figures 3, 4 and 5 are flow charts illustrating steps in methods embodying various aspects of the present invention;
Figures 6 to 10 illustrate resource allocation in a wireless telecommunications system.

### DETAILED DESCRIPTION OF THE PREFERRED EMBODIMENTS

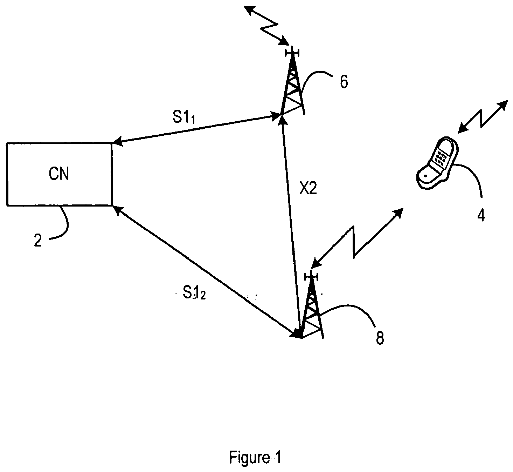

Figure 1 is a schematic diagram of a wireless telecommunications system 1 which is operable in accordance with an aspect of the invention. The system 1 of Figure 1 includes core network (CN) resources 2, a first basestation 6, and a second basestation 8. The first basestation 6 defines a first communications cell in which communications with mobile terminals are handled by the first basestation 6. Similarly, the second basestation 8 defines a second communications cell in which communication with mobile terminals are handled by the second basestation 8. An exemplary mobile terminal (or user equipment UE) 4 is illustrated in Figure 1. Each of the basestations is able to communicate with the core network resources 2 for call routing and other tasks, as is well known and understood, using signalling links S1₁ and S1₂. In addition, the first and second basestations 6 and 8 are able to communicate with one another using a communications route (or interface) X2.

It will be readily appreciated that the system of Figure 1 is simplified, and that, in practice, a system will have many basestations defining respective communications cells. Such a system is able to provide communications for many mobile terminals.

As mentioned above, the mobile terminal 4 communicates with a single basestation at any one time, and, as the mobile terminal moves around the area covered by the system, the mobile terminal will cross cell boundaries, and so communication will need to be transferred to the next basestation. This process is known as "handover".

In the following description, the mobile terminal 4 is assumed to be at an outer limit of the communications cell defined by the first basestation 6, and that, therefore, the quality of the communications with the mobile terminal 4 is relatively low. The mobile terminal 4 can be considered to be in a "bad" radio environment, which is one that requires high output power to enable successful transmission. This high output power, however, means that the mobile terminal 4 is likely to interfere with, or disturb, communications in a neighbouring cell, in the example shown, the second cell defined by the second basestation 8. Alternatively, or additionally, the mobile terminal 4 may have its communications with the first basestation disturbed by the communications in the second cell.

The embodiments of the present invention are intended to mitigate these disturbances.

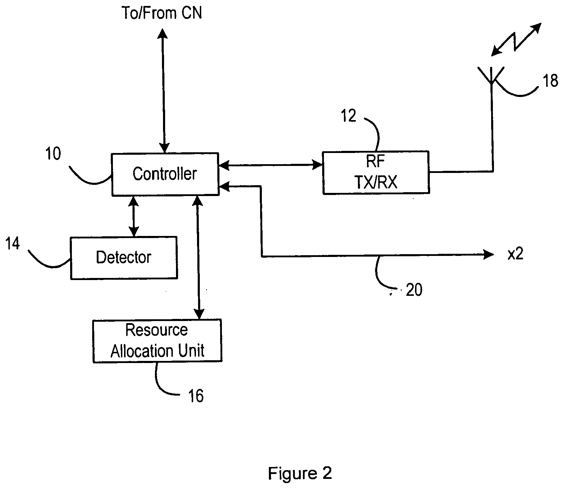

The structure of a basestation embodying one aspect of the present invention will now be described with reference to Figure 2. Typically, in a wireless telecommunications system, each basestation will be substantially the same as the next. Thus, the description of the basestation shown in Figure 2 applies to both the first and second basestations shown in Figure 1. The basestation of Figure 2 includes a controller 10 for controlling the overall operation of the basestation. The controller 10 is able to communicate with the core network resources. The basestation also includes a radio frequency (RF) transmitter (TX)/receiver (RX) unit 12 for communicating with mobile terminals via an antenna 18 in known manner.

In an embodiment of the present invention, the basestation includes a detector 14 and a resource allocation unit 16. It will be readily appreciated that the detector 14 and resource allocation unit may be provided by the controller 10 or other appropriate means. The controller 10 is able to communicate with other basestations using an interface connection X2 20.

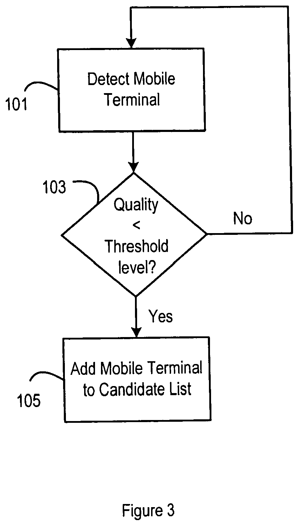

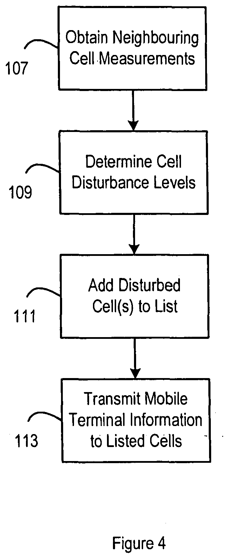

Operation of the basestation of Figure 2 will now be described with reference to Figures 1 and 2, and to the flow charts of Figures 3, 4 and 5.

Figure 3 is a flow chart illustrating a process performed in the first radio basestation 6. At steps 101 and 103, the detector 14 detects the communications of a mobile terminal within the first cell, and determines a quality measure of those communications by determining downlink communication (that is mobile terminal to basestation communication) quality. This is achieved by interpreting downlink (DL) measurements that have been reported from mobile terminals with bad radio conditions in the first cell. The DL radio conditions are known from the number of retransmissions that are required for successful transmission of data to be achieved, together with the output power used for those retransmissions. This information is known by the first radio basestation. The DL radio conditions can also be derived from the mobile terminal quality measurements reported to the basestation. Determining the uplink (UL) radio conditions can be achieved in a number of ways. For example, the DL radio conditions can be assumed to provide a fair picture of the UL conditions to the first radio basestation. Alternatively, the first radio basestation 6 can detect the number of transmission required by the mobile terminal 4 in order that data is received by the basestation successfully. This information can be combined with the power levels instructed to the mobile terminal, and with the first radio basestation's quality measurements. The expected interference contribution in the cell, for the chosen mobile terminal, can therefore be derived. As a result, it is possible to determine whether or not the mobile terminal 4 disturbs a neighbouring cell.

At step 105, it is determined whether the quality measure is below a threshold value, that is, it is determined whether the communications with the mobile terminal are of high enough quality. If they are, then the detector reverts to step 101, and detects another mobile terminal.

If the communications do not reach the required quality, for example when the mobile terminal is at an edge of the first cell and requires high output power, the details of the mobile terminal are stored as part of a candidate list. This candidate list represents mobile terminals that may be disturbing, or being disturbed by, one or more neighbouring cells. In the present example, it is assumed that the mobile terminal 4 is at the edge of the first cell bordering the second cell, and that, therefore, disturbance is likely between the mobile terminal 4 and the second cell.

In a practical embodiment of the invention, many mobile terminals will be communicating in each cell, and so the candidate list is likely to include many mobile terminals.

For each of the mobile terminals on the candidate list, at step 107, the controller 10 obtains measurements from the mobile terminal of the neighbouring cells. Such measurements are obtained from determining pilot channel signals from the neighbouring cells. The measurements are returned to the basestation by the mobile terminal, preferably in the form of a RRC message. From this information, the cell disturbance levels (both by and to the mobile terminal) are determined (step 109).

The cells that then appear to be disturbed or disturbing (the so-called "target cells") are then added to a cell list (step 111). A cell list is created for each identified mobile terminal.

The controller 10 then transmits information concerning the disturbing or disturbed mobile terminals to the appropriate basestations for the target cells on the cell list of the mobile terminal concerned. In the example being described, details of the mobile terminal 4 are sent by the first basestation 6 to the second basestation 8, via the interface X2.

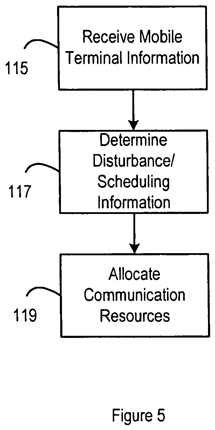

Figure 5 is a flow chart illustrating a process performed in the basestations of the target cells. For the sake of simplicity, a single operation at the second basestation 8 will be described for the single mobile terminal 4 will be described. It will be readily appreciated that such a process can be carried out for as many mobile terminals and cells as appropriate.

At step 115, the information relating to the mobile terminal 4 is received at the second basestation 8 from the first basestation 6. The information preferably contains at least scheduling and resource allocation information for the mobile terminal 4. At step 117, the resource allocation unit 16 of the second basestation evaluates the scheduling information for the mobile terminal 4 in order to confirm whether or not it will disturb the second communications cell. This evaluation is described in more detail below. The resource allocation unit 16 then proceeds to allocate resources for the second cell (step 119) using the received information.

If it is determined that the mobile terminal 4 will not, in fact, disturb the cell, or be disturbed by the cell, then the received information is discarded and resource allocation for the second cell is performed without reference thereto.

If, however, it is determined that the mobile terminal 4 is disturbed by, or is disturbing, the second cell, then there exist several options for allocation of resources for the second cell.

For example, the resource allocation unit 16 may terminate the scheduling of any of its existing mobile terminals using the time/frequency period in which the disturbance occurs. This may be possible, for example, through rescheduling its existing mobile terminals to a time/frequency period different to that of the disturbing/disturbed mobile terminal 4.

An alternative is for the second basestation to schedule only mobile terminals with good radio conditions in the disturbed time/frequency period. This will serve to reduce the interference, since good radio conditions suggest that low transmission powers are used, and so the likelihood of disturbance is reduced.

The second basestation 8 may also take steps to avoid scheduling new users in the disturbed time/frequency period, thus reducing any further possible disturbance.

The approach requires that the scheduling is deterministic for at least a few 10 ms ahead. Deterministic allocation requires significant latency (10-100 ms) to ensure that all affected basestations are made aware of the intended scheduling, before it occurs.

The effects of latency may be handled differently for different transmission situations:
- Best efforts. Best effort data is not latency sensitive. The resource allocation decision can be made many milliseconds in advance.
- Voice/video telephone. Voice/video codecs are very predictive and so resource allocation can be made for a long duration of time, i.e. a mobile terminal will be allocated X basic resource blocks every 20 ms, and according to a specific frequency hopping scheme. The first scheduled message/messages may not be known by the other basestations, but once the scheme is received the other basestations can counteract.
- Quality of Service (QoS) non-predictive services. These are services which are unknown but have requested high QoS. The amount of data to be transmitted cannot be assumed to be small. Such communications can be handled by each basestation reserving a part of the bandwidth (or time domain) for high-interfering mobile terminals. In some techniques, this is a static part of the bandwidth and denoted "1 reuse on cell centre and >1 reuse on cell border". In accordance with the principles of the present invention, this reserved area can grow and decrease based on the actual need in the cell. When a QoS non-predictive service is initiated the corresponding expected bandwidth is "reserved" and signalled to the neighbouring cells. This can either be done by reserving a portion of the bandwidth or by reserving a frequency-hopping scheme of certain bandwidth.

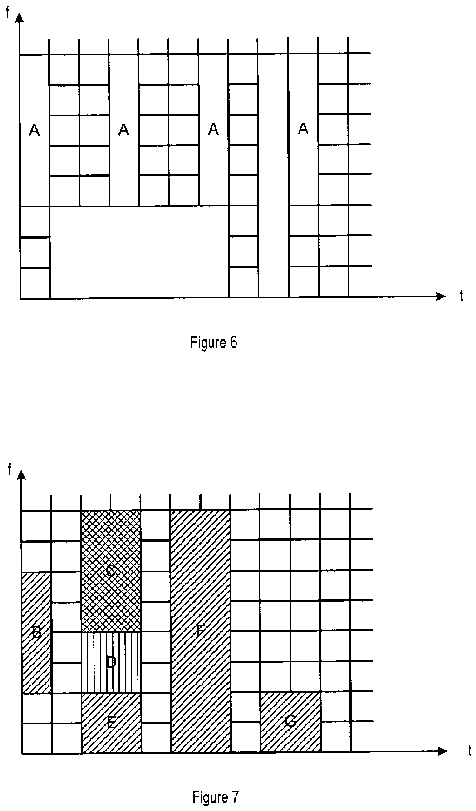

Figures 6 to 10 will now be described in order to explain resource allocation according to an aspect of the present invention. In these Figures, the grid represents exemplary basic resource blocks, where the horizontal axis indicates the time duration of a block, and the vertical axis indicates the frequency bandwidth of a block. Each mobile terminal has one or more contiguous blocks allocated for communications.

Figure 6 illustrates an example of allocation of resources block to the mobile terminal 4 by the first basestation 6. Blocks A in Figure 6 indicate the resource blocks allocated to the mobile terminal 4.

As mentioned above, when the first basestation determines that the second cell may be disturbed by, or disturbing, the mobile terminal 4, the first basestation transmits information concerning the intended resource allocation for the mobile terminal 4.

Figure 7 illustrates an example of intended resource allocation in the second cell by the second basestation 8. As can be seen in Figure 7, mobile terminals B, C, D, E, F, and G are allocated resources in the second cell.

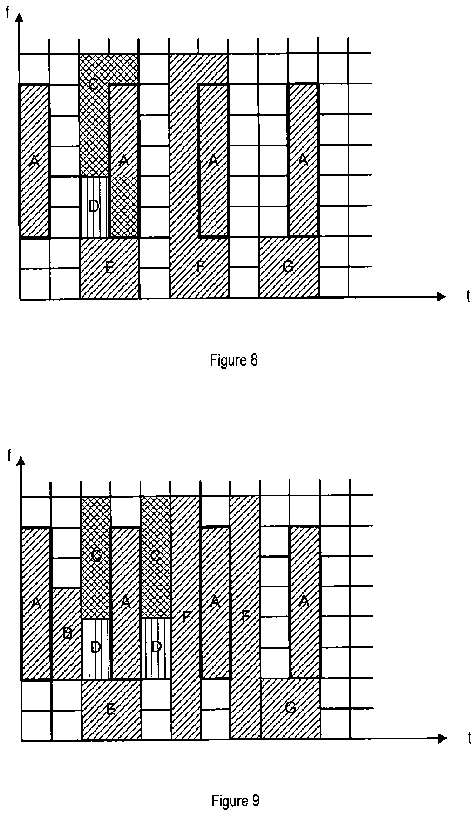

Figure 8 illustrates how the intended allocation for the mobile terminal 4 (shown by blocks A) conflicts with the intended allocation for the existing mobile terminals in the second cell. Accordingly, assuming that the second basestation 8 determines that the mobile terminal 4 will disturb communications for at least some of the existing mobile terminals in the second cell, the second basestation must reallocate resources in order to avoid disturbance.

Figure 9 illustrates a possible reallocation scheme for the second cell, in which the allocated resources for the existing mobile terminals and the mobile terminal 4 are arranged so as not to overlap or disturb one another.

The second basestation 8 reallocates its resources in order to ensure a proper communications with the existing mobile terminals in the second cell. In addition, the second basestation 8 can detect, at least, the envelope of the signal from the mobile terminal 4, so as to determine the amount of possible disturbance caused by the mobile terminal 4. Typically, the second basestation 8 will not be able to decrypt the signal from the mobile terminal 4, and so only the signal envelope is available to be measured. However, in one alternative example, the second basestation 8 is able to decrypt communications from the mobile terminal 4, and so is able to measure timing (offset from ideal), signal quality (e.g. signal to noise ratio), and/or signal strength.

In addition to the second basestation 8 reallocating resources in the second communications cell, the first basestation can reallocate resources for the first cell using the information gathered for the mobile terminal 4. The reallocation of resources in the first and second communications cells can serve to optimise the capacity of those cells.

When allocating resources for the first and/or second communications cells, frequency hopping techniques can be used in order to obtain frequency diversity frequency hopping schemes are particularly relevant to longer term resource allocation.

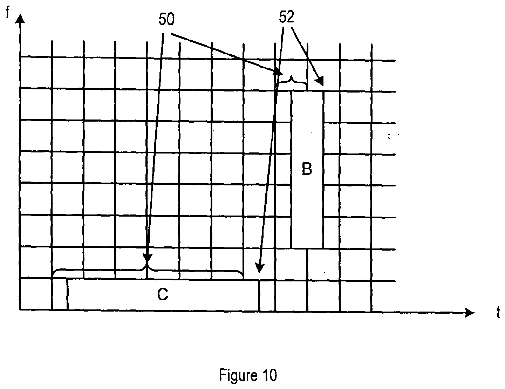

Since a disturbing, or disturbed, mobile terminal will be unsynchronised in the time domain with respect to the second cell, it is preferable schedule the mobile terminal over resource blocks that are continuous in the time domain, rather than in the frequency domain. Such allocation is illustrated in Figure 10. The allocation B is contiguous in the frequency domain; and it can be seen that this allocation disturbs a large number of blocks in the time domain. In contrast, the allocation C disturbs only two blocks in the time domain.

Each basestation can maintain a "buffer" of resource block hopping sequences. This is similar to a static configuration, but the size of the allocated bandwidth (BW) is set to a small value - to allow for moving mobile terminals to a "protected" BW fast and with low requirements on the communications interface X2, but without allocating a significant part. The "buffer" is updated on second-to-second basis to minimise wasted BW but to maintain a small margin for new mobile terminals with bad signal quality. The update of buffer can include the current usage of the sequences to allow for timing advance measurements by the probable target cells.

In one example, the second basestation 8 is able to report to the first basestation 6, via the communications interface X2, on the measurements taken regarding the mobile terminal 4. For example, if the second communication cell is heavily disturbed by the mobile terminal 4, then the second basestation 8 can propose handover of the mobile terminal from the first basestation 6 to the second basestation 8. Alternatively, the first basestation 6 could lower the data rate allocated to the mobile terminal 4, thereby reducing the transmission power required, and reducing possible disruption to the second communications cell.

Another possibility is for the second basestation 8 to transmit data to the mobile terminal 4, such data being supplied to the second basestation 8 from the first basestation 6, via the communications interface X2. Such data transmission results in downlink macro diversity. The first basestation 6 provides both the payload data to transmit and the channel coding, modulation and possible scrambling to use. The second base station 8 outputs the data according the channel coding, modulation and possible scrambling. The mobile terminal 4 will receive the same signal from both the first and second basestation. However, scheduling control and retransmission control will only be sent from the first basestation 6. Uplink macro diversity can be achieved by the second basestation 8 forwarding the received data from mobile terminal 4 to the first basestation 6. If the data received by the receiver of the first basestation 6 is insufficient for successful decoding of the mobile terminal 4 uplink information, the first basestation 6 can use the forwarded data from second basestation 8. The acknowledgement or retransmission request sent back to the mobile terminal 4 by the first basestation 6 is based on one or both of the received pieces of data. A drawback with uplink macro diversity as described here is an extra delay imposed due to the communication path between the first and second basestation..The delay will add up to hundreds of microseconds extra delay before the data received from the second basestation 8 is received and ready to be used by the first basestation 6, and thus extra delay before a acknowledgement or retransmission request can be sent to the mobile terminal 4. The extra delay will not have significant system degradation.

Both UL and DL macro diversity will work best where the basestation to basestation distance is small as the difference in path delay between each basestation and the mobile will be within the range the receiver, in the mobile and the basestation respectively, is required to be able to compensate for. Typically, basestation-basestation distance of 2 km can easily be handled. For distances larger than that, the communication for the second basestation 8 to the mobile terminal 4 will have another timing (advanced or delayed) compared to the mobile terminals in the cell controlled by the second basestation.

## Claims

1. A method for a first base station (6) serving a first cell having two or more neighbor cells served by at least one second base station, comprising the steps of:
• obtaining a quality measure of a radio link with one or more mobile terminal/s in the first cell,
• determining (103, 105) based on the obtained quality measure that one or more mobile terminal/s may be disturbed by one or more of said neighbor cells, or may be disturbing one or more of said neighbor cells;
and for each of the one or more mobile terminal/s for which it is determined that it may be disturbed by one or more of said neighbor cells or
may be disturbing one or more of said neighbor cells,
• obtaining (107) measurements from the terminal on said one or more neighbor cells;
• determining (109), that one or more of said neighbor cells is/are disturbed by or disturbing the mobile terminal, based on the measurements on said neighbor cells as obtained from the mobile terminal;
• informing (113) the one or more second base station/s providing the neighbor cells that are determined to be disturbed or disturbing the mobile terminal, of resources scheduled for the mobile terminal in the first cell.

2. The method of claim 1 wherein the first cell and the two or more neighbor cells are assigned at least partly overlapping frequency spectrum for scheduling to the mobile terminals served by the respective cell.

3. The method of claim 1 or 2 wherein the resources scheduled to the mobile terminal are resource blocks in time and frequency dimensions.

4. The method of claim 1, 2 or 3 wherein the resources scheduled to the mobile terminal are selected using a predictable frequency hopping technique.

5. The method of claim 1, 2 or 3 comprising the further step of:
• transmitting user data to the one or more second base station/s that are determined to be disturbed or disturbing, for this/these second base station/s to forward the user data to the mobile terminal, wherein this/these second base station/s is operable to communicate data with the mobile terminal without that mobile terminal registering with the second base station (8).

6. The method of claim1, 2, 3 or 5 comprising the further step of:
• receiving user data from the second base station/s and that originates from the mobile terminal, wherein this/these second base station/s is operable to communicate data with the mobile terminal without that mobile terminal registering with the second base station (8).

7. A base station (6) for use in a wireless telecommunications system and arranged for supporting communications in at least a first cell having two or more neighbor cells, and comprising:
• an interface for communicating with one or more second base station that serve/s communication in one or more of said neighbor cells;
• means (10, 12,14) for obtaining a quality measure of a radio link with one or more mobile terminal/s in the first cell,
• means (10, 12,14) for determining based on the obtained quality measure that one or more mobile terminal/s may be disturbed by one or more of said neighbor cells, or may be disturbing one or more of said neighbor cells;
• means for obtaining (10, 12,14) for each of the one or more mobile terminal/s for which it is determined that it may be disturbed by one or more of said neighbor cells or may be disturbing one or more of said neighbor cells, measurements from the mobile terminal on one or more of said neighbor cells;
• a detector (14) operable to detect, that one or more of said neighbor cell/s is/are disturbed by or disturbing the terminal (4), based on the measurements on said neighbor cells as obtained from the mobile terminal;
• a resource allocation unit (16) operable to schedule resources for communication with the mobile terminal in the first cell;
• a controller (10) controlling the operation of the base station and arranged for informing the one or more of the second base station/s that serve/s one or more of the neighbor cell/s that is/are determined to be disturbed or disturbing the mobile terminal, of the resources scheduled for the mobile terminal.

8. The base station of claim 7 and that is arranged to operate on a frequency band that is commonly used by the first and the second cells.

9. The base station of claim 7 or 8 wherein the resource allocation unit is arranged to schedule resources in the form of resource blocks in time and frequency dimensions.

10. The base station of claim 7, 8 or 9 and that is arranged to transmit user data via said interface to the one or more second base station/s (8) that are determined to be disturbed or disturbing, for enabling this/these second base station/s to forward the user data to the mobile terminal, wherein this/these second base station/s is operable to communicate data with the mobile terminal without that mobile terminal registering with the second base station (8).

11. The base station of claim 7, 8, 9 or 10 and that is arranged to receive user data from the second base station/s (8) via said interface and that originates from the mobile terminal, wherein this/these second base station/s is operable to communicate data with the mobile terminal without that mobile terminal registering with the second base station (8).

## Patentansprüche

1. Verfahren für eine erste Basisstation (6), die eine erste Zelle bedient, die über zwei oder mehr benachbarte Zellen verfügt, die durch zumindest eine zweite Basisstation bedient werden, die folgenden Schritte umfassend:
• Erlangen eines Qualitätsmaßes einer Funkverbindung mit einem oder mehreren mobilen Endgeräten in der ersten Zelle,
• Bestimmen (103, 105), basierend auf dem erlangten Qualitätsmaß, dass eines oder mehrere mobile Endgeräte durch eine oder mehrere der benachbarten Zellen gestört sein kann/können oder eine oder mehrere der benachbarten Zellen stören kann/können;
und für jedes des einen oder der mehreren Endgeräte, für das bestimmt ist, dass es durch eine oder mehrere der benachbarten Zellen gestört sein kann oder dass es eine oder mehrere der benachbarten Zellen stören kann,
• Erlangen (107) von Messungen von dem Endgerät auf der einen oder den mehreren benachbarten Zellen;
• Bestimmen (109), dass eine oder mehrere der benachbarten Zellen durch das mobile Endgerät gestört ist/sind oder das mobile Endgerät stört/stören, basierend auf den Messungen auf den benachbarten Zellen, wie von dem mobilen Endgerät erlangt;
• Informieren (113) der einen oder der mehreren zweiten Basisstationen, die die benachbarten Zellen bereitstellen, für die bestimmt ist, dass sie durch das mobile Endgerät gestört sind oder das mobile Endgerät stören, über Ressourcen, die für das mobile Endgerät in der ersten Zelle geplant sind.

2. Verfahren nach Anspruch 1, wobei die erste Zelle und die zwei oder mehr benachbarten Zellen zumindest teilweise einem überlappenden Frequenzspektrum zum Planen an die mobilen Endgeräte, die durch die entsprechende Zelle bedient werden, zugewiesen sind.

3. Verfahren nach Anspruch 1 oder 2, wobei die Ressourcen, die für das mobile Endgerät geplant sind, Ressourcenblöcke in Zeit- und Frequenzdimensionen sind.

4. Verfahren nach Anspruch 1, 2 oder 3, wobei die Ressourcen, die für das mobile Endgerät geplant sind, unter Verwendung einer vorhersagbaren Frequenzsprungtechnik ausgewählt sind.

5. Verfahren nach Anspruch 1, 2 oder 3, ferner umfassend den folgenden Schritt:
• Übertragen von Benutzerdaten an die eine oder die mehreren zweiten Basisstationen, für die bestimmt ist, dass diese gestört sind oder stören, damit diese zweite(n) Basisstation(en) die Benutzerdaten an das mobile Endgerät weiterleiten, wobei diese zweite(n) Basisstation(en) dazu betreibbar ist/sind, Daten mit dem mobilen Endgerät zu kommunizieren, ohne dass sich das mobile Endgerät in der zweiten Basisstation (8) registriert.

6. Verfahren nach Anspruch 1, 2, 3 oder 5, ferner umfassend den folgenden Schritt:
• Empfangen von Benutzerdaten von der/den zweiten Basisstation(en) und die von dem mobilen Endgerät stammen, wobei diese zweite(n) Basisstation(en) dazu betreibbar ist/sind, Daten mit dem mobilen Endgerät zu kommunizieren, ohne dass sich das mobile Endgerät in der zweiten Basisstation (8) registriert.

7. Basisstation (6) zur Verwendung in einem drahtlosen Telekommunikationssystem und angeordnet zum Unterstützen von Kommunikation in zumindest einer ersten Zelle, die zwei oder mehr benachbarte Zellen aufweist, und umfassend:
• eine Schnittstelle zum Kommunizieren mit einer oder mehreren zweiten Basisstationen, die Kommunikation in einer oder mehreren der benachbarten Zellen bedient/bedienen;
• Mittel (10, 12, 14) zum Erlangen eines Qualitätsmaßes einer Funkverbindung mit einem oder mehreren mobilen Endgeräten in der ersten Zelle,
• Mittel (10, 12, 14) zum Bestimmen, basierend auf dem erlangten Qualitätsmaß, dass eines oder mehrere mobile Endgeräte durch eine oder mehrere der benachbarten Zellen gestört sein kann/können oder eine oder mehrere der benachbarten Zellen stören kann/können;
• Mittel (10, 12, 14) zum Erlangen für jedes des einen oder der mehreren Endgeräte, für das bestimmt ist, dass es durch eine oder mehrere der benachbarten Zellen gestört sein kann oder dass es eine oder mehrere der benachbarten Zellen stören kann, von Messungen von dem mobilen Endgerät auf einer oder mehreren der benachbarten Zellen;
• einen Detektor (14), der dazu betreibbar ist, zu erkennen, dass eine oder mehrere der benachbarten Zellen durch das Endgerät (4) gestört ist/sind oder das Endgerät stört/stören, basierend auf den Messungen auf den benachbarten Zellen, wie von dem mobilen Endgerät erlangt;
• eine Ressourcenzuweisungseinheit (16), die dazu betreibbar ist, Ressourcen zur Kommunikation mit dem mobilen Endgerät in der ersten Zelle zu planen;
• eine Steuerung (10), die den Betrieb der Basisstation steuert und dazu angeordnet ist, die eine oder die mehreren der zweiten Basisstationen, die eine oder mehrere der benachbarten Zellen bedient/bedienen, für die bestimmt ist, dass sie durch das mobile Endgerät gestört ist/sind oder das mobile Endgerät stört/stören, über Ressourcen, die für das mobile Endgerät geplant sind, zu informieren.

8. Basisstation nach Anspruch 7 und die dazu angeordnet ist, auf einem Frequenzband zu arbeiten, das gemeinsam durch die erste und die zweite Zelle genutzt wird.

9. Basisstation nach Anspruch 7 oder 8, wobei die Ressourcenzuweisungseinheit dazu angeordnet ist, Ressourcen in der Form von Ressourcenblöcken in Zeit- und Frequenzdimensionen zu planen.

10. Basisstation nach Anspruch 7, 8 oder 9 und die dazu angeordnet ist, Benutzerdaten über die Schnittstelle an die eine oder die mehreren Basisstationen (8), für die bestimmt ist, dass diese gestört ist/sind oder stört/stören, zu übertragen, um es dieser zweiten Basisstation/diesen zweiten Basisstationen zu ermöglichen, die Benutzerdaten an das mobile Endgerät weiterzuleiten, wobei diese zweite(n) Basisstation(en) dazu betreibbar ist/sind, Daten mit dem mobilen Endgerät zu kommunizieren, ohne dass sich das mobile Endgerät in der zweiten Basisstation (8) registriert.

11. Basisstation nach Anspruch 7, 8, 9 oder 10 und die dazu angeordnet ist, Benutzerdaten von der/den zweiten Basisstation(en) (8) über die Schnittstelle zu empfangen, die von dem mobilen Endgerät stammen, wobei diese zweite Basisstation/diese zweiten Basisstationen dazu betreibbar ist/sind, Daten mit dem mobilen Endgerät zu kommunizieren, ohne dass sich das mobile Endgerät in der zweiten Basisstation (8) registriert.

## Revendications

1. Procédé pour une première station de base (6) desservant une première cellule ayant au moins deux cellules voisines desservies par au moins une deuxième station de base, comprenant les étapes suivantes :
• l'obtention d'une mesure de qualité d'une liaison radio avec un ou plusieurs terminaux mobiles dans la première cellule,
• la détermination (103, 105), sur la base de la mesure de qualité obtenue, qu'un ou plusieurs terminaux mobiles peuvent être perturbés par une ou plusieurs desdites cellules voisines ou peuvent perturber une ou plusieurs desdites cellules voisines ;
et pour chacun de l'un ou plusieurs terminaux mobiles pour lequel il est déterminé qu'il pourrait être perturbé par une ou plusieurs desdites cellules voisines ou pourrait perturber une ou plusieurs desdites cellules voisines,
• l'obtention (107) de mesures à partir du terminal sur ladite une ou plusieurs desdites cellules voisines ;
• la détermination (109) qu'une ou plusieurs desdites cellules voisines sont perturbées par ou perturbent le terminal mobile, sur la base des mesures sur lesdites cellules voisines telles qu'obtenues à partir du terminal mobile ;
• la notification (113), à l'une ou plusieurs deuxièmes stations de base desservant les cellules voisines qui sont déterminées comme étant perturbées par ou perturbant le terminal mobile, de ressources planifiées pour le terminal mobile dans la première cellule.

2. Procédé selon la revendication 1, dans lequel un spectre de fréquences se chevauchant au moins partiellement est attribué à la première cellule et aux au moins deux cellules voisines, pour la planification pour les terminaux mobiles desservis par la cellule respective.

3. Procédé selon la revendication 1 ou 2, dans lequel les ressources planifiées pour le terminal mobile sont des blocs de ressources dans des dimensions temporelles et fréquentielles.

4. Procédé selon la revendication 1, 2 ou 3, dans lequel les ressources planifiées pour le terminal mobile sont sélectionnées en utilisant une technique de saut de fréquence prévisible.

5. Procédé selon la revendication 1, 2 ou 3, comprenant l'étape ultérieure suivante :
• la transmission de données d'utilisateur à l'une ou plusieurs deuxièmes stations de base qui sont déterminées comme étant perturbées ou perturbant, pour que cette ou ces deuxièmes stations de base retransmettent les données d'utilisateur au terminal mobile, dans lequel cette ou ces deuxièmes stations de base sont utilisables pour communiquer des données avec le terminal mobile sans que ce terminal mobile s'enregistre auprès de la deuxième station de base (8).

6. Procédé selon la revendication 1, 2, 3 ou 5, comprenant l'étape ultérieure suivante :
• la réception de données d'utilisateur à partir de la ou des deuxièmes stations de base et qui proviennent du terminal mobile, dans lequel cette ou ces deuxièmes stations de base sont utilisables pour communiquer des données avec le terminal mobile sans que ce terminal mobile s'enregistre auprès de la deuxième station de base (8).

7. Station de base (6) pour l'utilisation dans un système de communication sans fil et agencée pour supporter des communications dans au moins une première cellule ayant au moins deux cellules voisines, et comprenant :
• une interface pour communiquer avec une ou plusieurs deuxièmes stations de base qui desservent une communication dans une ou plusieurs desdites cellules voisines ;
• des moyens (10, 12, 14) pour obtenir une mesure de qualité d'une liaison radio avec un ou plusieurs terminaux mobiles dans la première cellule,
• des moyens (10, 12, 14) pour déterminer, sur la base de la mesure de qualité obtenue, qu'un ou plusieurs terminaux mobiles peuvent être perturbés par une ou plusieurs desdites cellules voisines ou peuvent perturber une ou plusieurs desdites cellules voisines ;
• des moyens pour obtenir (10, 12, 14), pour chacun de l'un ou plusieurs terminaux mobiles pour lequel il est déterminé qu'il pourrait être perturbé par une ou plusieurs desdites cellules voisines ou pourrait perturber une ou plusieurs desdites cellules voisines, des mesures à partir du terminal mobile sur une ou plusieurs desdites cellules voisines ;
• un détecteur (14) utilisable pour détecter qu'une ou plusieurs desdites cellules voisines sont perturbées par ou perturbent le terminal (4), sur la base des mesures sur lesdites cellules voisines telles qu'obtenues à partir du terminal mobile ;
• une unité d'allocation de ressources (16) utilisables pour planifier des ressources pour une communication avec le terminal mobile dans la première cellule ;
• un dispositif de commande (10) commandant le fonctionnement de la station de base et agencé pour informer l'une ou plusieurs des deuxièmes stations de base qui desservent une ou plusieurs des cellules voisines qui sont déterminées comme étant perturbées par ou perturbant le terminal mobile, des ressources planifiées pour le terminal mobile.

8. Station de base selon la revendication 7, et qui est agencée pour fonctionner sur une bande de fréquences qui est utilisée en commun par la première et les deuxièmes cellules.

9. Station de base selon la revendication 7 ou 8, dans laquelle l'unité d'allocation de ressources est agencée pour planifier des ressources sous la forme de blocs de ressources dans des dimensions temporelles et fréquentielles.

10. Station de base selon la revendication 7, 8 ou 9, et qui est agencée pour transmettre des données d'utilisateur par le biais de ladite interface à l'une ou plusieurs deuxièmes stations de base (8) qui sont déterminées comme étant perturbées ou perturbant, pour permettre à cette ou ces deuxièmes stations de base de retransmettre les données d'utilisateur au terminal mobile, dans lequel cette ou ces deuxièmes stations de base sont utilisables pour communiquer des données avec le terminal mobile sans que ce terminal mobile s'enregistre auprès de la deuxième station de base (8).

11. Station de base selon la revendication 7, 8, 9 ou 10, et qui est agencée pour recevoir des données d'utilisateur à partir de la ou des deuxièmes stations de base (8) par le biais de ladite interface et qui proviennent du terminal mobile, dans lequel cette ou ces deuxièmes stations de base sont utilisables pour communiquer des données avec le terminal mobile sans que ce terminal mobile s'enregistre auprès de la deuxième station de base (8).
